**Europäisches Patentamt**

**European Patent Office**

**Office européen des brevets**

(19)

(11) **EP 1 300 721 A2**

(12) **EUROPEAN PATENT APPLICATION**

(43) Date of publication:
**09.04.2003 Bulletin 2003/15**

(51) Int Cl.⁷: **G02F 1/1337**, G02F 1/139

(21) Application number: **02256872.9**

(22) Date of filing: **02.10.2002**

| | |
|---|---|
| (84) Designated Contracting States:<br>**AT BE BG CH CY CZ DE DK EE ES FI FR GB GR**<br>**IE IT LI LU MC NL PT SE SK TR**<br>Designated Extension States:<br>**AL LT LV MK RO SI**<br><br>(30) Priority: **02.10.2001 GB 0123686**<br><br>(71) Applicant: **SHARP KABUSHIKI KAISHA**<br>**Osaka 545-8522 (JP)**<br><br>(72) Inventors:<br>• **Acosta, Elizabeth Jane**<br>  **Botley, Oxford, Oxfordshire OX2 9AL (GB)** | • **Tillin, Martin David**<br>  **Abingdon, Oxfordshire OX14 2PG (GB)**<br>• **Towler, Michael John**<br>  **Botley, Oxford, Oxfordshire OX2 9AL (GB)**<br><br>(74) Representative: **Suckling, Andrew Michael**<br>**Marks & Clerk,**<br>**4220 Nash Court,**<br>**Oxford Business Park South**<br>**Oxford OX4 2RU (GB)** |

(54) **A liquid crystal display device**

(57)     A liquid crystal display device comprises a first substrate, a first alignment layer (3') disposed on a surface of the first substrate, a second substrate, second alignment layer (3) disposed on a surface of the second substrate, and a liquid crystal layer disposed between the first substrate and the second substrate.

The alignment direction of the first alignment layer (3') has a non-zero component in a first azimuthal direction (7') in a first region (20') of the alignment layer and has a non-zero component in a second azimuthal direction (41') different from the first azimuthal direction (7') in a second region (21') of the first alignment layer. In consequence, in zero applied electric field across the liquid crystal layer, a first liquid crystal state is stable in a first volume (22) of the liquid crystal layer defined by the first region (20') of the first alignment layer (3') and a second liquid crystal state topologically equivalent to a desired operating state of the device is stable in a second volume (23) of the liquid crystal layer defined by the second region (21') of the first alignment layer (3'). The second volume (23) of the liquid crystal layer acts as a nucleation region and promotes formation of the desired operating state in the first volume (22) of the active layer when an electric field is applied across the liquid crystal layer. The first volume (22) of the liquid crystal layer acts as an active region for displaying an image.

FIG 3(a)

FIG 3(b)

Active Region    Nucleation Region

**Description**

The present invention relates to a liquid crystal display device, and in particular to a surface mode LCD such as a pi-cell device or a splay-bend device (SBD).

The term "surface mode LCD" as used herein means a LCD in which the optical change caused by varying the electric field across the liquid crystal layer occurs primarily in the surface layers of the liquid crystal. Examples of surface mode LCDs are the pi-cell and the splay-bend device, although other types of surface mode LCDs are known. Surface mode LCDs are disclosed by P.D. Berezin et al. in "Sov. J. Quant. Electronics", Vol 3, p78-79 (1973).

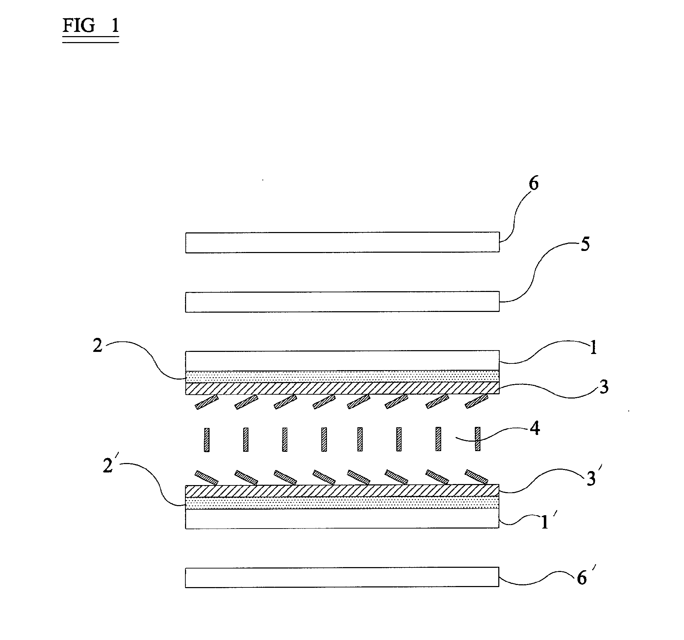

The pi-cell (otherwise known as an "optically compensated birefringent device" or OCB) is described by P.J. Bos et al. in "Mol. Cryst. Liq. Cryst.", Vol 113, p329-339 (1984) and in US patent 4 635 051. The structure of a pi-cell is schematically illustrated in Figure 1. The device comprises transparent substrates 1, 1' on which are disposed alignment layers 3, 3'. A layer of nematic liquid crystal 4 is disposed between the substrates 1, 1'.

The alignment layers 3, 3' create parallel alignment of the liquid crystal molecules in the liquid crystal layer 4 at its boundaries with the alignment layers 3, 3'. This can be achieved by using parallel-rubbed polyamide alignment layers.

Addressing electrodes 2,2' are provided on the substrates 1, 1', so that an electric field can be applied to selected areas of the liquid crystal layer. The liquid crystal layer 4 is placed between linear polarisers 6, 6', whose transmission axes are crossed with one another and are at 45° to the optic axis of the liquid crystal layer.

A retarder 5, with its optic axis crossed to the optic axis of the liquid crystal layer, may optionally be provided between the liquid crystal layer 4 and one of the polarisers to compensate for the retardation of the liquid crystal layer. The retarder lowers the required range for the operating voltage by allowing zero retardation of the LCD to be achieved at a finite voltage across the liquid crystal layer.

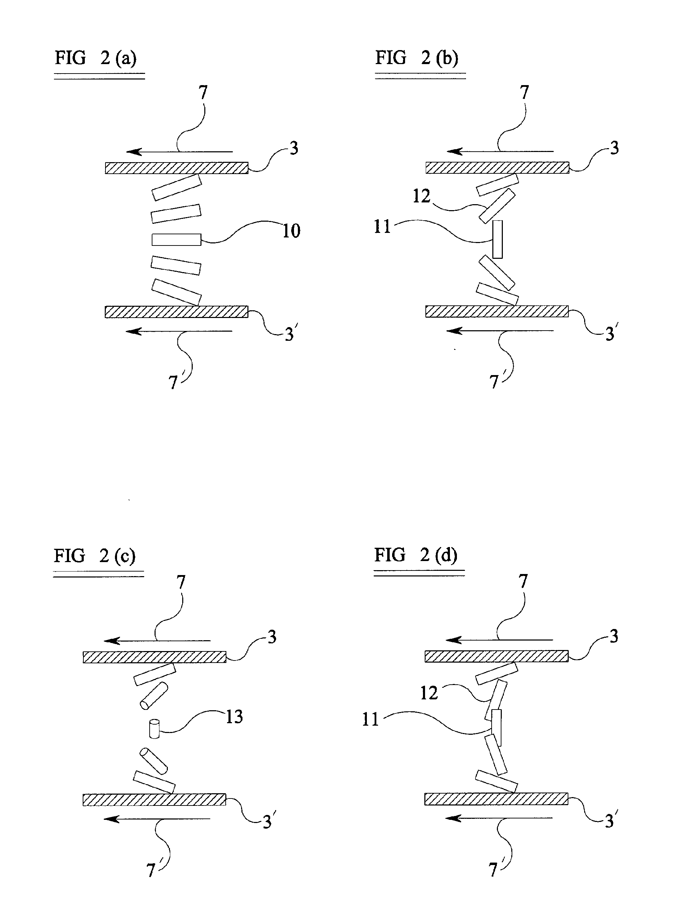

The principle of operation of the pi-cell device is illustrated in Figures 2(a) to 2(c).

In the pi-cell device of Figures 2(a) to 2(d), the alignment direction 7 of the alignment layer 3 on the upper substrate 1 is parallel to the alignment direction 7' of the alignment layer 3' on the lower substrate 1'. When no electric field is applied across the liquid crystal layer, the stable liquid crystal state is a splay state (H-state). The term "splay state" as used herein is intended to encompass any liquid crystal state in which the director of the liquid crystal layer is, at some point in the bulk of the liquid crystal layer (that is, excluding liquid crystal molecules substantially at the substrate), substantially parallel to the substrates. That is, a "splay state" includes any state in which the director of the liquid crystal layer has substantially zero tilt (relative to the substrate) at some point in the bulk of the liquid crystal layer.

In the splay state shown in Figure 2(a), the director of liquid crystal molecules in the centre of the liquid crystal layer is substantially parallel to the substrates. The rectangles and cylinders in figures 2(a) to 2(d) represent the director of the liquid crystal molecules.

When an electric field greater than a threshold value is applied across the liquid crystal layer, the liquid crystal molecules adopt a bend state (V-state). The term "bend state" as used herein is intended to encompass any liquid crystal state in which there is no point in the bulk of the liquid crystal layer (that is, excluding liquid crystal molecules substantially at the substrate), at which the director of the liquid crystal layer is substantially parallel to the substrates. That is, a "bend state" includes any state in which the director of the liquid crystal layer does not have substantially zero tilt (relative to the substrate) at any point in the bulk of the liquid crystal layer.

In the bend states shown in Figures 2(b) and 2(d), the director of liquid crystal molecules in the centre of the liquid crystal layer is substantially perpendicular to the substrates. Figure 2(b) shows a first bend state which occurs at a low applied voltage across the liquid crystal layer, and Figure 2(d) shows a second bend state which occurs when a higher voltage is applied across the liquid crystal layer. The pi-cell is operated by switching the liquid crystal layer between the first, low voltage bend state of Figure 2(b) and the second, higher voltage bend state of Figure 2(d). As can be seen from Figures 2(b) and 2(d), there is little change in the orientation of the liquid crystal molecules 11 in the centre, in a thickness direction, of the liquid crystal layer upon switching from the first, low voltage bend state of Figure 2(b) to the second, higher voltage bend state of Figure 2(d) or vice versa. Most of the change in orientation of the liquid crystal molecules occurs in the surface regions 12 of the liquid crystal layer near the substrates, and it is this that gives rise to the name "surface mode device".

If the electric field across the liquid crystal layer should be reduced below the threshold value, the liquid crystal layer will relax to the twist state shown in Figure 2(c) before relaxing to the splay state of Figure 2(a); in order to re-commence operation of the device, it is necessary to put the liquid crystal layer back into the bend state. The twist state and the bend state are each topologically distinct from the splay state. Thus, a nucleation process involving the generation of a dislocation wall between the splay state and the bend state or twist state, and the movement of this dislocation wall across the liquid crystal layer, is required in order for the liquid crystal layer to change from the splay state to the bend state or twist state. This generally requires a large applied voltage, owing to the low pre-tilt of the liquid crystal molecules. The pre-tilt is usually below 45° and typically between 2 and 10° so as to provide sufficient optical modulation and fast switching between the two bend states (for instance of the order of several milliseconds or less).

The SBD device, which is also a surface mode device, is described in UK Patent Application No. 9712378.0. The structure of a SBD device is generally similar to that of a pi-cell, except that the alignment layers in a SBD device have a high pre-tilt whereas the alignment layers in a pi cell have a low pre-tilt. An SBD device uses a liquid crystal material with a negative di-electric anisotropy, whereas a pi-cell uses a liquid crystal material having a positive di-electric anisotropy. When no voltage is applied across the liquid crystal layer of a SBD device, a bend state is stable. When an voltage greater than a threshold value is applied across the liquid crystal layer, a splay state becomes stable. In operation, a SBD device is switched between a low voltage splay state and a high voltage splay state. If the voltage across the liquid crystal layer is reduced below the threshold, the liquid crystal will relax into the bend state, and it is necessary to put the liquid crystal layer back into a splay state before operation can restart.

One problem with known pi-cells is the difficulty of nucleating and stabilising the bend state, which is topologically distinct from the splay state. A number of prior art approaches to promoting nucleation of the bend state is known.

US Patent No 4 566 758 disclosed a pi-cell in which the liquid crystal layer contains a chiral dopant so that the ratio of the thickness of the liquid crystal layer (d) to the pitch of the liquid crystal molecules (p) satisfies d/p > 0.25. In this device, the stable liquid crystal state at low applied voltages is not a splay state, and the stable liquid crystal state at high applied voltages is a twist state (T-state) rather than a bend state. This device overcomes the problem of nucleating the desired operating state, and demonstrates similar optical properties to a conventional pi-cell at high applied voltages since a twist state has generally similar optical properties to a bend state. However, at lower applied voltages the effect of the inherent twist of the liquid crystal layer on the optical characteristics produces a poorer performance than a conventional pi-cell. In particular, the presence of a chiral dopant reduces the brightness of the device.

UK Patent Application 9521043.1 proposed a technique nucleating the bend state under the application of a high voltage, and stabilising the bend state by the polymerisation of a network whilst a high voltage is applied. This prior art technique is, however, unsuitable for use in active matrix devices, since it is difficult to apply voltages having the required magnitude in a TFT panel. A further disadvantage is that the in-situ polymerisation can lead to ionic contamination of the liquid crystal layer, and result in image sticking.

Noguchi et al. suggest, in SID 97 Digest, page 739, a method of promoting nucleation of the bend state in a pi-cell. Voltages of the order of 20V are applied across the liquid crystal layer to switch the liquid crystal from the splay state to the bend state. However, it is difficult to provide voltages of this magnitude in a TFT (thin film transistor) substrate.

Miwa et al suggest, in IDW 97-Digest page 85, a method of maintaining the stability of a bend state in a pi-cell. A resetting period is provided within each frame, and the high voltage bend state is addressed in this period. This prevents the liquid crystal layer relaxing to the splay state when low driving voltages are applied. This does not, however, address the initial nucleation of the bend state from the splay state.

EP-A-0 996 028 describes a pi-cell having a nucleation region in which a HAN (hybrid aligned nematic) state or a bend state is stable at low applied voltages across the liquid crystal layer. The nucleation region is defined by patterning the alignment films so that they have regions of high pre-tilt and regions of low pre-tilt, and the HAN state or bend state is stabilised in the high pre-tilt regions.

EP-A-0 996 028 also teaches forming nucleation regions. These are formed by putting the liquid crystal layer into the desired operating state, and polymerising a selected volume of the liquid crystal layer to fix the selected volume in the operating state.

EP-A-0 965 876 discloses a pi-cell in which an active region of the liquid crystal layer is surrounded by regions in which the liquid crystal layer adopts a substantially homeotropic alignment. This homeotropic region prevents a splay state re-forming in the active region, so that the active region relaxes into a twist state when no voltage is applied across the liquid crystal layer. The operating state of the device is a bend state.

The methods of EP-A-0 996 028 and EP-A-0 965 876 have the disadvantage that very few alignment layers can be treated to give regions of homeotropic alignment and regions of planar alignment. Furthermore, for materials that allow this to be done, the resultant pre-tilt properties are highly dependent on the particular liquid crystal material used.

Japanese published Patent Application JP-A-9 90432 (Toshiba) discloses the provision of nucleation sites within a pi-cell panel. The nucleation sites are provided by including spacer balls or pillars within the pi-cell panel, and cooling the liquid crystal material from an isotropic phase to a nematic phase while an electric field is applied across the panel. This results in some of the spacer balls/pillars acting as nucleation sites for growth of the V-state into the H-state. This prior art has a number of disadvantages. Firstly, it requires additional process steps during fabrication of the panel, since it is necessary to align the liquid crystal molecules under the influence of an applied electric field. These additional process steps complicate the fabrication of the panel. Secondly, some spacer balls/pillars can nucleate the H-state into the V-state thus destabilising the operating state of the panel.

A further disadvantage is that, for this method to work effectively, the device is ideally cooled from the isotropic phase under an applied electric field, to provide the correct anisotropic structure around the spacer ball or pillar. This process is difficult to carry out, and is unsuited to mass-production of the device.

JP-A-9 218 411 (Sekisui) discloses a liquid crystal display device in which the liquid crystal layer has a bend state. The bend state is stabilised, in the absence of an applied electric field across the liquid crystal layer, by providing spherical spacer particles in the liquid crystal layer. The spacer particles have a surface energy such that liquid crystal molecules adjacent the alignment layers are aligned predominantly parallel to the alignment layers. This method has the disadvantage that an electric field must be applied across the liquid crystal layer during the initial alignment of the device. A further disadvantage is that the spacer particles must be positioned within pixel regions of the device, so that the contrast ratio of the display is reduced by the presence of the particles. A further disadvantage is that this method also requires that the device is cooled from the isotropic phase under an applied field which, as noted above, makes the method unsuitable for mass-production techniques.

Co-pending UK Patent Application No. 0024636.3 discloses a liquid crystal display device in which nucleation regions having a thickness to pitch ratio of d/p > 0.25 are provided so as to stabilise the 180° twist state when no electric field is applied across the liquid crystal layer. In one embodiment the thickness of the liquid crystal layer is increased in the nucleation regions, compared to the active regions, in order to obtain the required d/p ratio. In an alternative embodiment the pitch of the liquid crystal molecules is lower in the nucleation regions than in the active regions so that the required d/p ratio is achieved in the nucleation regions. The active regions have a lower d/p ratio.

The techniques described in this application require a variation in the thickness of the liquid crystal layer, which requires additional processing steps. Alternatively, it requires that the pitch of the liquid crystal molecules varies over the liquid crystal layer, and this involves a masked photo-polymerisation process which can be difficult to control; furthermore, the in-situ polymerisation process can lead to ionic contamination and result in image sticking.

JP-A-2000-066 208 (Matsushita) discloses an OCB liquid crystal device in which the nucleation of the bend state is aided by varying the pre-tilt of the alignment layer so as to provide regions of anti-parallel alignment in the liquid crystal layer. However, this in itself is not sufficient to ensure adequate nucleation of a bend state, so it is further necessary to make one of the alignment layers rough. This method again requires additional processing steps. Furthermore, the regions of anti-parallel alignment and the roughened regions of the alignment layer are within the active regions of the device, and so may adversely affect the viewing angle and contrast ratio of the device.

EP-A-0 996 028 discloses a liquid crystal display device having a nucleation region. The nucleation region is defined by varying the pre-tilt angle of an alignment film.

EP-A-1 124 1538 discloses a liquid crystal display device having a nucleation region. The nucleation region is defined by varying the thickness of the liquid crystal layer.

A first aspect of the present invention provides a liquid crystal display device comprising:

a first substrate; a second substrate; a liquid crystal layer disposed between the first substrate and the second substrate; a first alignment layer disposed on the surface of the first substrate adjacent the liquid crystal layer; and a second alignment layer disposed on the surface of the second substrate adjacent the liquid crystal layer; wherein the alignment direction of the first alignment layer has a non-zero component in a first azimuthal direction in a first region of the first alignment layer and has a non-zero component in a second azimuthal direction in a second region of the first alignment layer, the first azimuthal direction being different from the second azimuthal direction, whereby, in zero applied field, a first liquid crystal state is stable in a first volume of the liquid crystal layer defined by the first region of the first alignment layer and a second liquid crystal state topologically equivalent to a desired operating state of a device is stable in a second volume of the liquid crystal layer defined by the second region of the first alignment layer.

An alignment layer aligns liquid crystal molecules adjacent to the alignment layer in a preferred direction. The preferred direction may be in the plane of the alignment layer (in the case of an alignment layer that induces zero per-tilt), or it may be out of the plane of the alignment layer (in the case of an alignment layer that induces a non-zero pre-tilt angle). The term "alignment direction" as used hereinbelow is the overall alignment direction induced in liquid crystal molecules adjacent to an alignment layer, and may be in the plane of, or out of the plane of, the alignment layer. The "azimuthal component" of an alignment direction, as used hereinbelow, is the component of an alignment direction in the plane of the alignment layer responsible for inducing that alignment direction. The term "azimuthal direction" as used hereinbelow is a direction in the plane of the relevant alignment layer.

Two liquid crystal states are said to be topologically equivalent to one another if the liquid crystal material can transform smoothly from one of the liquid crystal states to the other liquid crystal state. In order for a smooth transformation to be possible, firstly, it must not be necessary to generate a disclination or other discontinuity in the liquid crystal structure within the bulk of the liquid crystal layer during the transformation and, secondly, the surface alignment of the liquid crystal material at its upper and lower surfaces must be the same in the two liquid crystal states. Defining a first liquid crystal state as topologically equivalent to a second liquid crystal state is intended to include the possibility that the first liquid crystal state is the same as the second liquid crystal state.

The second liquid crystal volume acts as a nucleation region. Providing the nucleation region promotes the formation of the desired liquid crystal operating state in the first liquid crystal volume when an electric field is applied across the liquid crystal layer. The liquid crystal structure is distorted at the interface between the second liquid crystal volume and the first liquid crystal volume, so that a disclination or other defect exists at the interface even at zero applied electric field. Providing the nucleation region reduces the applied electric field that is required to obtain the desired liquid crystal operating state of the device in the first liquid crystal volume, since there is no need to generate a disclination or other defect at the interface - all that is required is to move the existing disclination or defects through the first liquid crystal volume. The first liquid crystal volume acts as an active region for displaying an image, once the desired operating state has been formed in the first liquid crystal volume. The second liquid crystal state is stabilised in the nucleation region, for no electric field applied across the liquid layer, by varying the alignment direction of the first alignment layer thereby reducing the d/p ratio of the liquid crystal layer required to stabilise the second liquid crystal state.

The alignment direction of the second alignment layer may have a non-zero component in a third azimuthal direction in a first region of the second alignment layer and may have a non-zero component in a fourth azimuthal direction different from the third azimuthal direction in a second region of the second alignment layer .

The first region of the first alignment layer may be disposed generally opposite the first region of the second alignment layer, and the first azimuthal direction may be substantially parallel to the third azimuthal direction. This provides parallel alignment in the first liquid crystal volume so that, in the absence of an applied electric field across the liquid crystal layer, a splay state is the stable state in the first liquid crystal volume.

The second region of the first alignment layer may be disposed generally opposite the second region of the second alignment layer, and the second azimuthal direction may be substantially anti-parallel to the fourth azimuthal direction. This provides anti-parallel alignment in the second liquid crystal volume so that, in the absence of an applied electric field across the liquid crystal layer, a bend state is the stable state in the second liquid crystal volume

The azimuthal component of the alignment direction of the first region of the first alignment layer may be at substantially 90° to the azimuthal component of the alignment direction of the second region of the first alignment layer.

The second region of the first alignment layer may be disposed generally opposite the second region of the second alignment layer, and the second and fourth azimuthal directions may be selected to induce a liquid crystal twist angle $\phi$ in the second liquid crystal volume.

The magnitude of $\phi$ may be less than 90°. The liquid crystal layer may be a layer of achiral liquid crystal material.

The magnitude of $\phi$ may be between 90° and 165°. The liquid crystal layer may be a layer of chiral liquid crystal material.

The azimuthal component of the alignment direction of a region of the second alignment layer disposed opposite the first region of the first alignment layer may be substantially the same as the azimuthal component of the alignment direction of a region of the second alignment layer disposed opposite the second region of the first alignment layer.

The azimuthal component of the alignment direction of the region of the second alignment layer disposed opposite the second region of the first alignment layer may not be parallel to the azimuthal component of the alignment direction of the second region of the first alignment layer.

The azimuthal component of the alignment direction of the region of the second alignment layer disposed opposite the second region of the first alignment layer may be at substantially 90° to the azimuthal component of the alignment direction of the second region of the first alignment layer.

The pre-tilt angle of the second region of the first alignment layer may be substantially zero. The liquid crystal layer may be a layer of an achiral liquid crystal material.

The azimuthal component of the alignment direction of the region of the second alignment layer disposed opposite the first region of the first alignment layer may not be parallel to the azimuthal component of the alignment direction of the first region of the first alignment layer. The azimuthal component of the alignment direction of the first region of the first alignment layer may be substantially at 90° to the azimuthal component of the alignment direction of the second region of the first alignment layer.

The device may comprise a plurality of pixels, and the first volume of the liquid crystal layer and the second volume of the liquid crystal layer may be provided for the same pixel.

The second volume of the liquid crystal layer may be provided at least partially in a non-display portion of the device. It may be provided entirely in a non-display portion of the device.

A projection onto a selected one of the substrate of the second liquid crystal volume may surround a projection onto the selected one of the substrate of the first liquid crystal volume.

The device may be a pi-cell. It may alternatively be an SBD liquid crystal display device. It may alternatively be a reverse-doped twisted nematic liquid crystal display device.

Preferred embodiments of the present invention will now be described by way of illustrative example with reference to the accompanying figures in which:

Figure 1 is a schematic sectional view of a pi-cell;

Figures 2(a) to 2(d) illustrate various liquid crystal states in a pi-cell;

Figure 3(a) is a schematic perspective view of a liquid crystal display device according to a first embodiment of the present invention;

Figure 3(b) is a schematic sectional view of the liquid crystal display device of Figure 3(a);

Figures 4(a) to 4(g) illustrate stages of a method of producing the pi-cell of Figures 3(a) and 3(b);

Figure 5(a) is a schematic perspective view of a liquid crystal display device according to a second embodiment of the present invention;

Figure 5(b) is a schematic sectional view of the liquid crystal display device of Figure 5(a);

Figure 6(a) is a schematic perspective view of a liquid crystal display device according to a third embodiment of the present invention;

Figure 6(b) is a schematic sectional view of the liquid crystal display device of Figure 6(a);

Figure 7(a) is a schematic perspective view of a liquid crystal display device according to a fourth embodiment of the present invention;

Figure 7(b) is a schematic sectional view of the liquid crystal display device of Figure 7(a);

Figure 8(a) is a schematic perspective view of a liquid crystal display device according to a fifth embodiment of the present invention;

Figure 8(b) is a schematic sectional view of the liquid crystal display device of Figure 8(a);

Figure 9(a) is a schematic perspective view of a liquid crystal display device according to a sixth embodiment of the present invention;

Figure 9(b) is a schematic sectional view of the liquid crystal display device of Figure 9(a);

Figure 10(a) is a schematic perspective view of a liquid crystal display device according to a seventh embodiment of the present invention;

Figure 10(b) is a schematic sectional view of the liquid crystal display device of 10(a); and

Figure 11 is a schematic plan view of a liquid crystal display device according to an eighth embodiment of the present invention.

Like components are denoted by like reference numerals throughout the drawings.

The present invention provides a liquid crystal display device that comprises a region in which, at zero applied electric field across the liquid crystal layer, the stable liquid crystal state is topologically equivalent to the desired operating state of the device. This region acts as a nucleation region, and is defined by changing the azimuthal orientation of the alignment direction of at least one alignment layer of the liquid crystal device.

The invention will be described with particular regard to a pi-cell, for which the desired operating state is a bend state. It is known that a 180° twist state, in a parallel-aligned LCD, is topologically equivalent to a bend state and, as noted above, it has been proposed to provide a nucleation region in which a 180° twist state is stable by use of a chiral liquid crystal material for which |d/p| > 0.25. However, use of a liquid crystal material with such a high value for the d/p ratio reduces the brightness of the display. The present invention makes it possible to stabilise a twist state, at zero applied electric field, at lower d/p values so that the brightness of the display is not significantly reduced.

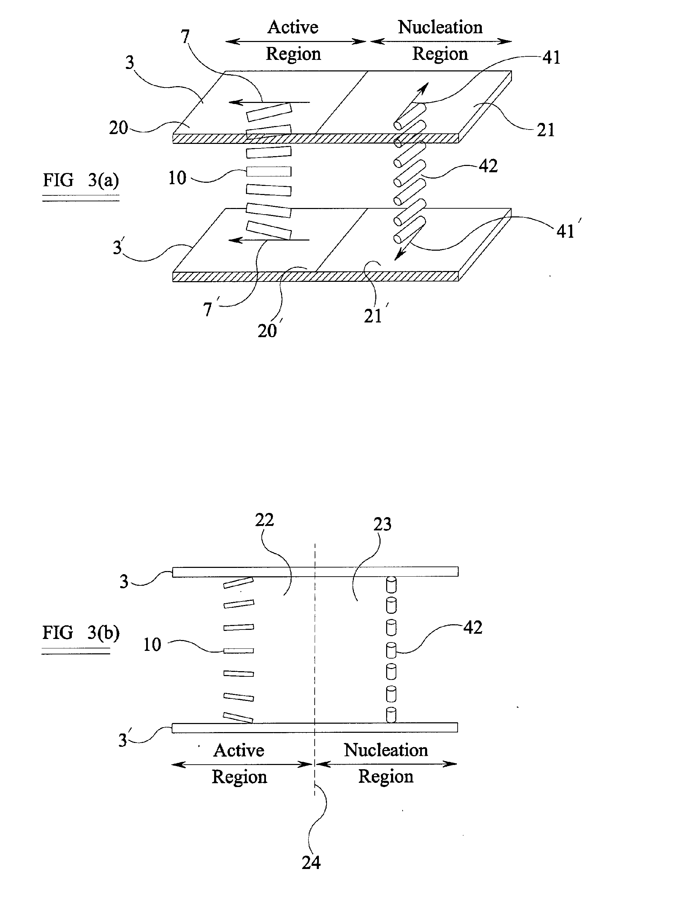

Figure 3(a) is a schematic perspective view of a liquid crystal display device (LCD) according to a first embodiment of the present invention, and Figure 3(b) is a schematic sectional view showing the liquid crystal orientation in the LCD of Figure 3(a). In this embodiment the LCD is a pi-cell, but the invention is not limited to a pi-cell.

Figures 3(a) and 3(b) show only the alignment layers 3, 3' and the liquid crystal molecules. The substrates 1,1' and the addressing electrodes 2, 2' have been omitted from Figures 3(a) and 3(b) for clarity. Figures 3(a) and 3(b) illustrate the LCD when no electric field is applied across the liquid crystal layer.

In the present invention, a nucleation region is defined in the liquid crystal layer of the LCD, to promote formation of the desired operating state of the device. The nucleation region is defined by patterning the azimuthal component of the alignment direction of at least one of the alignment layers 3, 3'. (In the embodiment of Figures 3(a) and 3(b) the azimuthal component of the alignment direction of both alignment layers is patterned, but in embodiments described below only one alignment layer is provided with regions of different azimuthal component of the alignment direction.)

As shown in Figure 3(a), the direction of the azimuthal component of the alignment direction of the lower alignment layer 3' is not constant over the area of the alignment layer 3'. In a first region 20' of the lower alignment layer 3' the azimuthal component of the alignment direction is non-zero and extends in a first direction 7', and in a second region 21' of the lower alignment layer 3' the azimuthal component of the alignment direction is again non-zero but extends in a second direction 41'. (The terms "upper" and "lower" are used herein for ease of description, and do not imply that LCDs of the invention are restricted to use in the orientation shown in the figures.) The first direction 7' and the second direction 41' are different, and both lie in the plane of the lower alignment layer 3'. Similarly, the azimuthal component of the alignment direction of the upper alignment layer 3 is also not in a constant direction over the area of the upper alignment layer 3. In a first region 20 of the upper alignment layer 3 the azimuthal component of the alignment direction of the upper alignment layer 3 is non-zero and extends in a third direction 7, and in a second region 21 of the upper alignment layer 3 the azimuthal component of the alignment direction of the upper alignment layer 3 is non-zero and extends in a fourth direction 41. The third direction 7 and the fourth direction 41 are different from one another, and are both in the plane of the upper alignment layer 3. The first and second regions of the upper alignment layer 3 are disposed generally opposite to the first and second regions respectively of the lower alignment layer 3'. The first region 20' of the lower alignment layer 3' defines a first liquid crystal volume 22, in which the liquid crystal alignment is determined by, inter alia, the direction 7 of the azimuthal component of the alignment direction of the first region 20 of the upper alignment layer 3 and the direction 7' of the azimuthal component of the alignment direction of the first region 20' of the lower alignment layer 3'. The second region 21' of the lower alignment layer 3' defines a second liquid crystal volume 23, in which the liquid crystal alignment is determined by, inter alia, the direction 41 of the azimuthal component of the alignment direction of the second region 21 of the upper alignment layer 3 and the direction 41' of the azimuthal component of the alignment direction of the second region 21' of the lower alignment layer 3'. The boundary between the first liquid crystal volume 22 and the second liquid crystal 23 is indicated schematically at 24 in Figure 3(b).

In this embodiment the first direction 7' and the third direction 7 are parallel to one another. Thus, the first volume 22 of the liquid crystal layer has parallel alignment. The fourth direction 41 is antiparallel (i.e., is at 180°) to the second direction 41'. Thus, the second volume 23 of the liquid crystal layer has anti-parallel alignment.

In this embodiment, the liquid crystal layer is a layer of an achiral nematic liquid crystal material. In the absence of an applied electric field, a splay state 10 is the stable liquid crystal state in the first liquid crystal volume 22, and a bend state 42 is the stable liquid crystal state in the second liquid crystal volume 23. A disclination will exist at the interface between the first liquid crystal volume 22 and the second liquid crystal volume 23, and the liquid crystal material may possibly adopt some degree of twist at the interface between the first and second liquid crystal volumes.

If a sufficiently high electric field is applied across the liquid crystal layer, a bend state will become the stable liquid crystal state in the first liquid crystal volume 22. The first liquid crystal volume 22 acts as an active region of the LCD, since its optical characteristics may be varied by changing the magnitude of the applied electric field to select either a low voltage bend state of the type shown in Figure 2(b) or a high voltage bend state of the type shown in Figure 2(d). Thus, a desired image may be displayed in the active region of the LCD.

The second liquid crystal region 23 acts as a nucleation region. The effect of providing the nucleation region is that a bend state is stable in the nucleation region even when no electric field is applied across the liquid crystal layer. The zero-voltage bend state 42 is topologically equivalent to the bend states shown in Figures 2(b) and 2(d) that form the operating states of the device. Thus, when an electric field is applied across the liquid crystal layer the desired bend state grows from the nucleation region (i.e., the second liquid crystal volume 23) into the active region of the liquid crystal layer (i.e., into the first liquid crystal volume 22). A disclination or other defect exists at the interface between the nucleation region (i.e., the second liquid crystal volume 23) and the active region (i.e., the first liquid crystal volume 22) even when no electric field is applied across the liquid crystal layer, so that the need to generate disclinations/defects upon application of a voltage is eliminated.

The first and third directions 7, 7' are at a non-zero angle to each of the second direction 41' and the fourth direction 41. Figures 3(a) and 3(b) show a particularly preferred case, in which the first and third directions 7, 7 are at 90° to each of the second and fourth directions 41', 41. When a pi-cell according to this embodiment is viewed as seen in Figure 3(b), the splay state in the active region lies in the plane of the paper and the bend state in the nucleation region projects out of the plane of the paper. This produces the maximum distortion at the interface between the splay state and the bend state, and so produces the most efficient nucleation of the bend state into the active region when a voltage is applied across the liquid crystal layer.

The angle between the first and third directions 7,7' and each of the second and fourth directions 41', 41 does not need to be 90°, and may be any angle that provides efficient nucleation of the bend state into the active region when a voltage is applied across the liquid crystal layer. However, the angle between the first and third directions 7,7' and each of the second and fourth directions 41', 41 is preferably greater than 70°, and it is unlikely that efficient nucleation would occur for an angle significantly below 45°.

A pi-cell according to the first embodiment may be realised using an achiral liquid crystal material (that is a liquid crystal material having d/p = 0). Thus, the invention avoids the loss of brightness that inevitably occurs if liquid crystal material with d/p > 0.25 is used in order to stabilise a 180° twist state in a nucleation region.

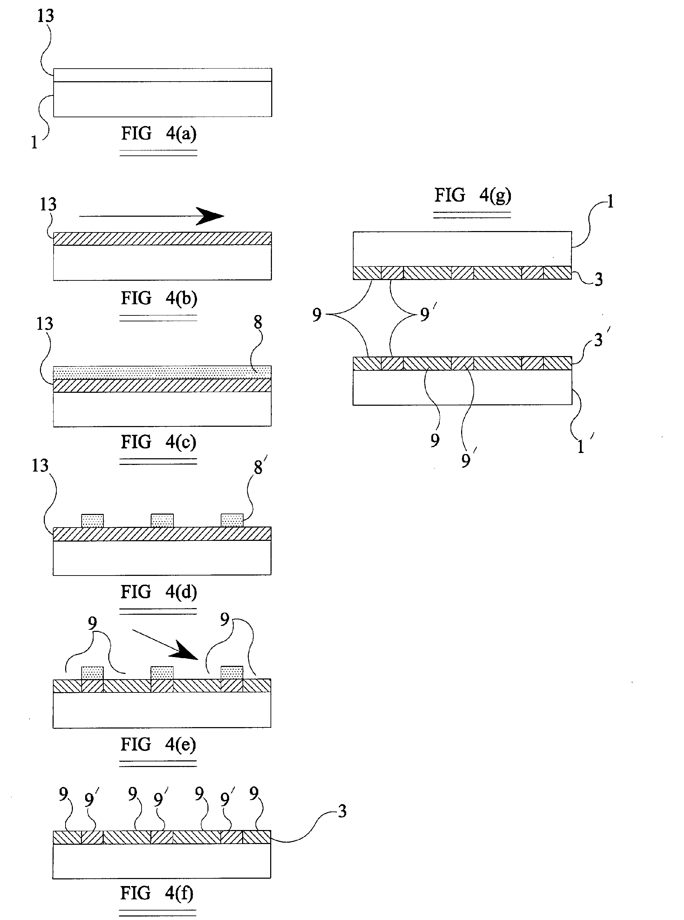

One method of producing an LCD according to the first embodiment of the invention will now be described with reference to Figures 4(a) to 4(g).

Initially, an alignment layer 13 is deposited over a cleaned glass substrate 1 coated with an indium tin oxide (ITO) layer (not shown). The ITO layer is a transparent conductive layer, that forms an addressing electrode. In this embodiment, the alignment layer is formed of Nissan Chemical Industries' polyimide RN-715 (type 0621). An unrubbed layer of this material has a high pre-tilt angle, and rubbing the material reduces the pre-tilt angle, to as low as 3°. (By stating that a material "has a high pre-tilt angle" it is meant that that, when the material is used as alignment film in a LCD, it induces a high pre-tilt angle in liquid crystal molecules that contact the alignment film.)

The alignment layer 13 may be deposited on the substrate 1 by any suitable method. In this method, the layer of RN-715 polyimide was spun onto the substrate 1 at 5krpm for 30 seconds. They polyimide layer was then heated to 80°C for two minutes, and then cured at 250°C for one hour.

Next, the alignment layer 13 is rubbed to reduce the pre-tilt angle of the alignment layer, as indicated in Figure 4(b). In this example, the alignment layer is rubbed three times with a rubbing cloth YA-20-R, on a 158mm circumference roller rotating at 3krpm, at a pile deformation of 0.3, and with a forward speed of 20mm/s.

A layer 8 of positive photo-resist is then deposited onto the alignment layer 13, as indicated in Figure 4(c). In this example, a layer 8 of the positive photo-resist Microposit S1805 series, from Shipley, Europe Limited, is spun-coated onto the alignment layer 13 at 4.5krpm for 40 seconds, to give a layer 8 of photo-resist with a thickness of around 500nm. The photo-resist layer was then given a soft bake at around 95°C for around 5 minutes, to evaporate the solvent.

The layer 8 of photo-resist is then patterned, by irradiating selected parts of the photo-resist layer. In this example, the irradiation step involves a 3.5-second exposure to UV light having a peak wavelength of 365nm and an intensity of 6.9mW/cm$^2$. The irradiation step is carried out through an UV-chrome photo-mask in the hard contact mode of a mask aligner. The photo-resist layer is then developed for one minute using the developer Microposit 351 CD 31, to remove the photo-resist from the regions that had been exposed to UV light. This leaves portions of the photo-resist layer that form a positive reproduction of the photo-mask pattern, as illustrated in Figure 4(d). The substrate is then washed to ensure complete removal of the exposed photo-resist. This may be done, for example, by immersing the substrate in de-ionised water for around 2 minutes.

The un-masked regions 9 of the alignment layer 13 are then subjected to a further rubbing process, to induce a low pre-tilt alignment in the unmasked regions 9 of the alignment layer 13. In this embodiment, this rubbing process involved rubbing the alignment layer 13 times with a rubbing cloth (YA-20-R), on a 158mm circumference roller rotating at 3krpm, at a pile deformation of 0.3, and with a forward speed of 20mm/s. This second rubbing step was carried out along a different rubbing direction than the first rubbing step of Figure 4(b). (The arrow in Figure 4(e) is intended to indicate that the rubbing direction in the second rubbing step was out of the plane of the paper. It does not indicate that the second rubbing process was not parallel to the surface of the alignment layer.)

The second rubbing step has no effect on the portions of the alignment layer 13 that are under the remaining portion 8' of photoresist. These portions of the alignment layer retain the alignment direction that was defined in the first rubbing step of Figure 4(b).

In this example, the second rubbing step is carried out along a direction that was at 90° to the rubbing direction of the first alignment step of Figure 4(b).

The remaining portions 8' of photo-resist are then removed from the substrate, for example by irradiating the entire substrate 1 with ultra violet light. In this example, the remaining portions 8' of photo-resist are removed using an unmasked exposure having a duration of five seconds to ultra violet light having a peak wave length of 365nm and an intensity of 6.9mW/cm$^2$. This irradiation step is followed by development in a developer Microposit 351 CD 31 for four minutes. The substrate is then washed, for example for two minutes in de-ionised water, to ensure complete removal of the photo-resist. The result of this step, as shown in Figure 4(f), is a patterned alignment layer 3. This contains regions 9 in which the rubbing direction is the rubbing direction defined by the second rubbing step in Figure 4(e), and regions 9' in which the rubbing direction is the rubbing direction defined in the first alignment step of Figure 4(b).

A liquid crystal display device according to Figure 3(a) may be formed by placing two substrates prepared by the method of Figures 4(a) to 4(f) opposite to one another. The substrates are disposed so that a region 9 of the alignment layer 3 of the upper substrate 1 that had been rubbed in the first and second rubbing processes was opposite a region 9 of the alignment layer 3' of the lower substrate 1' that had been rubbed in the first and second rubbing processes, and so that a region 9' of the alignment layer 3 of the upper substrate 1 that had been masked during the second rubbing process was disposed opposite a region 9' of the alignment layer 3' of the lower substrate 1' that had been masked during the second rubbing process. The substrates were disposed so as to provide a 6µm cell gap, and the cell was then filled with the nematic liquid crystal E7 manufactured by Merck. When no electric field was applied across the liquid crystal layer, the liquid crystal layer contained regions of parallel alignment in which a splay state was the stable state, separated by regions of anti-parallel alignment in which a bend state (42 in Figure 3) was the stable state. When a voltage greater than 2.5V is applied across the liquid crystal layer, a bend state grew from the regions of anti-parallel alignment into the regions of parallel alignment, to replace the splay state that previously existed in the regions of anti-parallel alignment. The regions of anti-parallel alignment act as nucleation regions, and promote the formation of the desired operating state in the regions of parallel alignment (which, as noted above, act as image display regions).

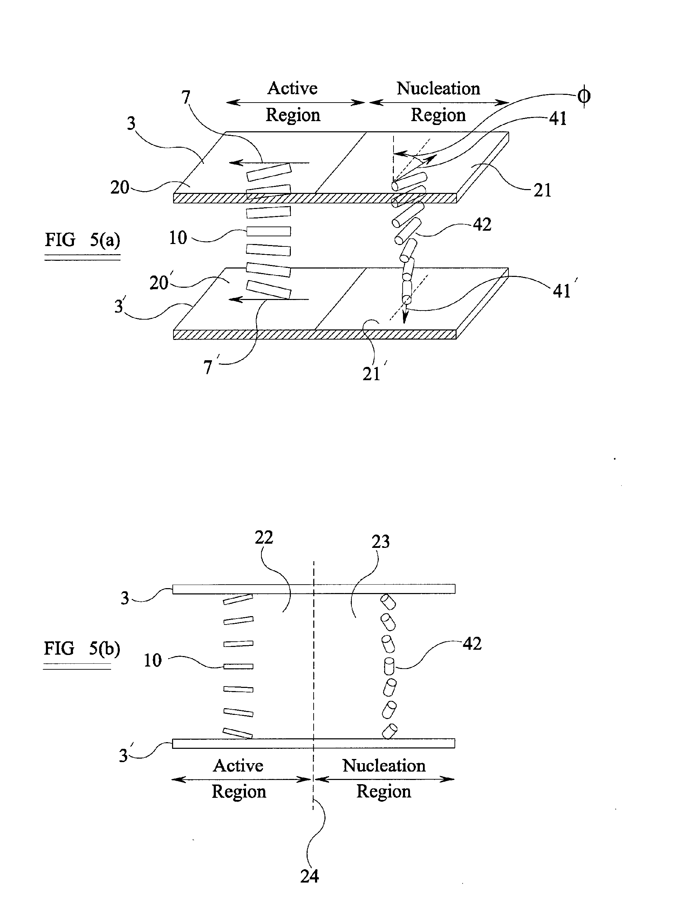

Figures 5(a) and 5(b) show an LCD according to a second embodiment of the present invention. This embodiment relates to a pi-cell. Figure 5(a) is a schematic perspective view of this embodiment, and Figure 5(b) is a schematic sectional view. Figures 5(a) and 5(b) illustrate the LCD when no electric field is applied across the liquid crystal layer.

The embodiment of Figure 5(a) and 5(b) is generally similar to the embodiment of Figure 3(a) and 3(b). In the embodiment of Figures 5(a) and 5(b), in a first region 20' of the lower alignment layer 3' the azimuthal component of the alignment direction is non-zero and extends in a first direction 7', and in a second region 21' of the lower alignment layer 3' the azimuthal component of the alignment direction is non-zero and extends in a second direction 41'. The first direction 7' and the second direction 41' are different from one another, and each lies in the plane of the lower alignment layer 3'. Similarly, the azimuthal component of the alignment direction of the upper alignment layer 3 is also not constant in direction over the area of the upper alignment layer 3 - in a first region 20 of the upper alignment layer 3 the azimuthal component of the alignment direction of the upper alignment layer 3 is non-zero and extends in a third direction 7, and in a second region 21 of the upper alignment layer 3 the azimuthal component of the alignment direction of the upper alignment layer 3 is non-zero and extends in a fourth direction 41. The third direction 7 and the fourth direction 41 are different from one another, and each lies in the plane of the upper alignment layer 3. The first and second regions of the upper alignment layer 3 are disposed generally opposite to the first and second regions respectively of the lower alignment layer 3'. The first region 20 of the upper alignment layer 3 and the first region 20' of the lower alignment layer 3' define a first liquid crystal volume 22, and the second region 21 of the upper alignment layer 3 and the second region 21' of the lower alignment layer 3' define a second liquid crystal volume 23.

In the embodiment of Figures 5(a) and 5(b) the azimuthal component of the alignment direction of the second region of the upper alignment layer 3 is not at an angle of 180° to the azimuthal component of the alignment direction of the second region of the lower alignment layer 3'. The angle between the azimuthal component in the second region of the upper alignment layer 3 (direction 41) and the azimuthal component in the second region of the lower alignment layer 3' (direction 41') is less than 180°, as indicated in Figure 5(a). As a result, a twist angle $\phi$ is induced in the liquid crystal molecules in the nucleation region. The twist angle $\phi$ is determined by the directions 41, 41', and is such that the sum of the twist angle $\phi$ and the angle between the direction 41 and the direction 41' is 180°. (The dashed line in Figure 5(a) indicates the projection of the direction 41' onto the upper alignment layer 3, and the dotted lines in Figure 5(a) indicate, for comparative purposes, the directions 41,41' in the embodiment of Figures 3(a) and 3(b).) In this embodiment the magnitude of the twist angle $\phi$ is less than 90° (that is, $-90° < \phi < +90°$). This embodiment can be realised with an achiral liquid crystal material, since no chiral dopant is required to allow the liquid crystal material to adopt a twist angle in this range.

To ensure nucleation of the desired operating state into the active region, the stable liquid crystal state in the nucleation region, under zero applied electric field, is required to be a bend state. Furthermore, the bend state in the nucleation region is preferably oriented in such a direction that it creates the maximum distortion within the bulk of the liquid crystal layer at the boundary between the first and second liquid crystal layer regions 22,23.

In the embodiment shown in Figure 5(a) the twist angle $\phi$ in the nucleation region is approximately 40°. As noted, however, the twist angle in this embodiment may be greater than -90° and less than +90°.

The orientation of the director 42 of the liquid crystal molecule in the centre, in the thickness direction, of the nucleation region is preferably at approximately 90° to the director 10 of the liquid crystal molecule in the centre, in the thickness direction, of the active region.

It was found that a pi-cell according to the second embodiment would generate a bend state in the active region when a voltage of around 2.5V was applied across the liquid crystal layer. The structure of the pi-cell was generally similar to the pi-cell described above with reference to Figure 4(g), except that the alignment directions of the upper and lower alignment layers in the nucleation region were as shown in Figure 5(a).

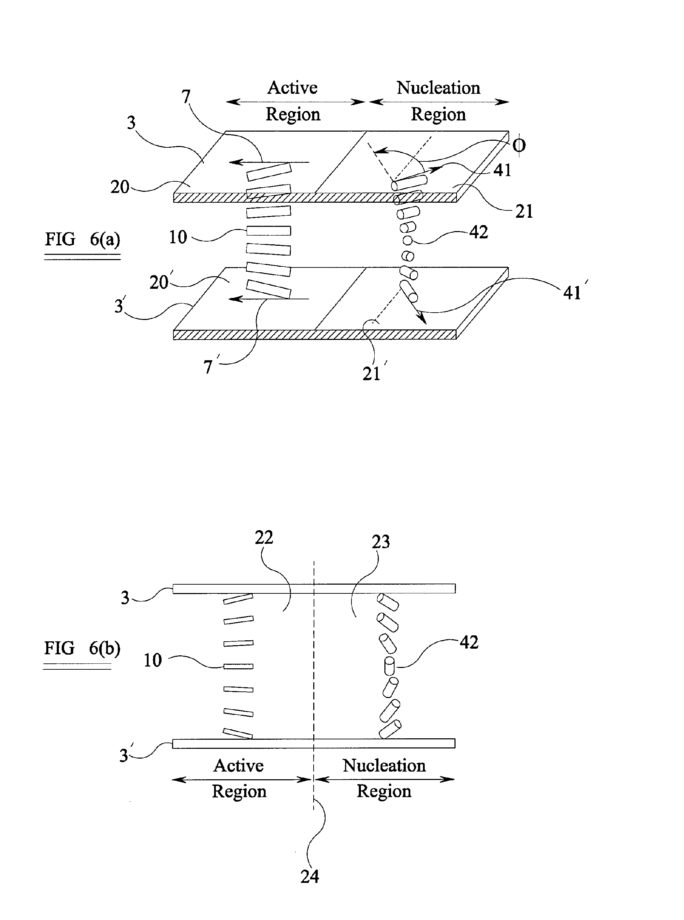

Figures 6(a) and 6(b) show an LCD according to a third embodiment of the present invention. This embodiment relates to a pi-cell. Figure 6(a) is a schematic perspective view of this embodiment, and Figure 6(b) is a schematic sectional view. Figures 6(a) and 6(b) illustrate the LCD when no electric field is applied across the liquid crystal layer.

The embodiment of Figures 6(a) and 6(b) is generally similar to that of Figures 5(a) and 5(b), and only the differences will be described.

In the embodiment of Figure 6(a) and 6(b), the direction 41 of the azimuthal component of the alignment direction of the upper alignment layer 3 in the nucleation region 23 is not at 180° to the direction 41' of the azimuthal component of the alignment direction of the lower alignment layer 3' in the nucleation region, so that a twist angle $\phi$ is induced in the liquid crystal molecules in the nucleation region in a similar manner to that described above with reference to Figures 5(a) and 5(b). In the embodiment of Figure 6(a) and 6(b), however, the magnitude of the twist angle is greater than 90° but less than 180°. To minimise the value required for the d/p ratio of the liquid crystal material the twist angle is preferably less than 165°. Figure 6(a) shows a twist angle $\phi$ of approximately 100° in the nucleation region.

If an achiral liquid crystal material were used in this embodiment, a splay state would be the stable state in the nucleation region when no electric field was applied across the liquid crystal layer. To prevent this, and to ensure that a bend state is the stable state in the nucleation region when no electric field is applied across the liquid crystal layer, in this embodiment the liquid crystal layer contains a chiral liquid crystal material. The term "chiral liquid crystal material", as used herein, is intended to include a liquid crystal material that is inherently chiral and also to include a liquid crystal material that contains both an inherently achiral liquid crystal material and a chiral dopant.

In one example of a liquid crystal display device according to this embodiment, the direction 41 of the azimuthal component of the alignment direction of the second region 21 of the upper alignment layer and the direction 41' of the azimuthal component of the alignment direction of the second region 21' of the lower alignment layer 3' were set to induce a twist angle of $\phi \approx 100°$ in the liquid crystal layer in the nucleation region. To support the twist of approximately 100° in the desired direction within the nucleation region, so that a bend state is the stable state in the absence of an applied electric field, the liquid crystal material E7 (produced by Merck) was doped with the chiral dopant S811 (also produced by Merck) to obtain a d/p ratio that satisfied 0.03 < d/p < 0.25. A d/p ratio of approximately 0.06 (d = 6μm, p = 97μm) was found to be suitable, and this required using the chiral dopant S811 at a concentration of 0.09% by weight in the liquid crystal E7. It was again found that the bend state nucleated in the active region when a voltage of approximately 2.5V was applied across the liquid crystal layer.

It should be noted that the chiral liquid crystal material used in this embodiment must be able to support not only the desired twist angle but also the desired direction of twist. For example, if the opposite-handed chiral dopant R811 had been used instead of the chiral dopant S811, a bend state would not be obtained in the nucleation region. Instead, a splay state would be the stable state in the nucleation region when no voltage was applied across the liquid crystal layer.

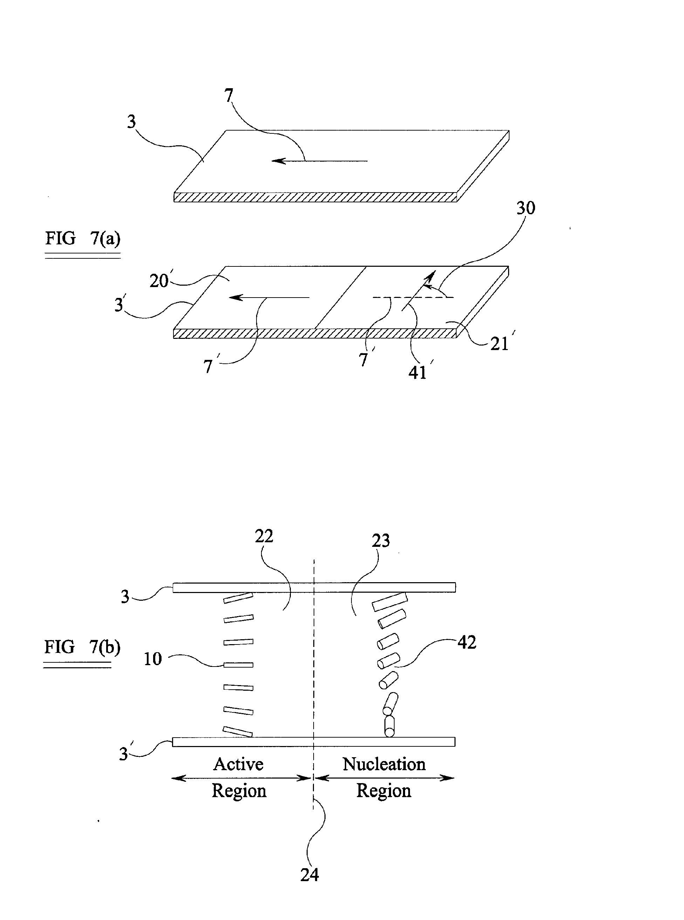

Figures 7(a) and 7(b) show an LCD according to a further embodiment of the present invention. This embodiment relates to a pi-cell. Figure 7(a) is a schematic perspective view of this embodiment, and Figure 7(b) is a schematic sectional view of this embodiment. Figures 7(a) and 7(b) illustrate the LCD when no electric field is applied across the liquid crystal layer.

The substrates 1,1' and the addressing electrodes 2, 2' have been omitted from Figures 7(a) and 7(b) for clarity. These figures therefore show only the alignment layers, 3, 3' and the liquid crystal molecules.

This embodiment is similar to the above-described embodiments in that a nucleation region is defined in the liquid crystal layer, by patterning the direction of the azimuthal component of the alignment direction on one of the alignment layers. In this embodiment, however, only one of the alignment layers is provided with a patterned alignment direction, and the other alignment layer is provided with generally the same azimuthal component of the alignment direction in both the nucleation region and the active region.

In this embodiment, the azimuthal component of the alignment direction of the lower alignment layer 3' is non-zero and lies along a first direction 7' in a first region 20', and is non-zero and lies in a second direction 41' different from the first direction in a second region 21'. The first and second directions lie in the plane of the lower alignment layer 3'. The angle between the direction 41' in the second region 21' of the lower alignment layer 3' and the direction 7' in the first region 20'of the lower alignment layer is denoted by reference 30. The angle 30 should be less than 180° since the liquid crystal material would be required to have |d/p| > 0.25 if the angle 30 is equal to 180°. In principle the angle 30 may take any value that is less than 180° and that creates sufficient distortion of the liquid crystal structure to provide efficient nucleation. In practice, it was found that nucleation did not occur if the angle 30 was significantly less than 80°. When the angle 30 was greater than 80° and less than 90° nucleation was observed for both achiral and chiral liquid crystal materials. When the angle 30 was greater than 90° and less than 180° nucleation was observed for chiral liquid crystal materials having a d/p value that satisfies equation 1 and has the correct sense of twist.

The azimuthal component of the alignment direction of the upper alignment layer 3 is defined such that, when the upper and lower substrates are assembled to form an LCD, the azimuthal component of the alignment direction of a region of the upper alignment layer 3 disposed opposite the first region 20' of the lower alignment layer 3' is substantially the same as the azimuthal component of the alignment direction of a region of the upper alignment layer 3 disposed opposite the second region 21' of the lower alignment layer 3'. This may conveniently be done by providing the upper alignment layer 3 with an alignment that is uniform over the entire area of the upper alignment layer. In this embodiment the azimuthal component of the alignment direction of the upper alignment layer extends in a third direction 7 over the entire upper alignment layer and extends in a third direction 7.

When the upper and lower substrates are assembled to form the LCD of this embodiment, they are arranged so that the azimuthal component of the alignment direction of the upper alignment layer 3 is parallel to the azimuthal component of the alignment direction of the first region 20' of the lower alignment layer (i.e., so that the third direction 7 is parallel to the first direction 7'). A parallel alignment thus exists in a first volume 22 of the liquid crystal layer that is defined by the first part 20' of the lower alignment layer 3'. In a second volume 23 of the liquid crystal layer, that is defined by the second region 21' of the lower alignment layer 3', a twist is induced in the liquid crystal material, because the azimuthal component of the alignment direction (direction 41') of the lower alignment layer 3' is at an angle 30 to the azimuthal component of the alignment direction (direction 7) of the upper alignment layer.

The direction 41' on the second region of the lower alignment layer, the magnitude of the twist angle 30, the direction of the twist angle 30, and the liquid crystal material are selected so that a bend-state is the stable liquid crystal state in the second liquid crystal volume 23 (in the absence of an applied electric field across the liquid crystal layer). A splay state is the stable liquid crystal state in the first liquid crystal volume 22 (in the absence of an applied electric field across the liquid crystal layer). The boundary between the first liquid crystal volume 22 and the second liquid crystal volume 23 is indicated schematically at 24.

The first liquid crystal volume 22 acts as an image display region, or active region, as described above with reference to the embodiment of Figures 3(a) and 3(b). The second liquid crystal volume 23 acts as a nucleation region and reduces the electric field necessary to form a bend state in the image display region, as also described above with reference to the embodiment of Figures 3(a) and 3(b).

In one pi-cell according to this embodiment of the invention, the liquid crystal material contained the liquid crystal material E7 made by Merck. This is an inherently achiral liquid crystal material, so that the liquid crystal layer may be required to further contain a chiral dopant in order to stabilise the bend state within the nucleation region. In this embodiment the chiral dopant S811 was added. Table 1 gives an example of the required d/p ratio for various values of the twist angle 30. The minimum and maximum d/p values for a bend angle $\phi$ are determined using

$$([\phi/360°] - 0.25) < \phi < ([\phi/360°] + 0.25) \tag{1}$$

| Bend angle determined by the direction of rub (30) | Direction of twist as seen from above from top to bottom substrate | Minimum d/p (S811) | Maximum d/p (S811) | E.g d/p used S811 (d=6μm) | Nucleation at low voltage |
|---|---|---|---|---|---|
| 85° | Anticlockwise | -0.014 | +0.486 | 0 | Yes |
| 90° | Anticlockwise | 0 | +0.50 | +0.05 | Yes |
| 100° | Anticlockwise | +0.03 | +0.53 | +0.53 | Yes |
| 110° | Anticlockwise | +0.06 | +0.56 | +0.56 | Yes |

It should be noted that, as for the embodiment of Figure 6(a) and 6(b) above, the hand of the chiral dopant is important. If an opposite - handed chiral dopant, such as the dopant R811, had been used in the examples described in Table 1 in place of the chiral dopant S811, the stable state in the nucleation region would not be a bend state, but would be a stable splay state.

In the pi-cell according to this embodiment the pre-tilt angle of the upper and lower alignment layers in the active region was approximately 8° and the pre-tilt angle of the upper and lower alignment layers in the active region was approximately 10°, although the invention is not limited to these specific values of pre-tilt.

In principle, this embodiment could incorporate a higher twist angle than the twist angles indicated in Table 1 above. However, if the twist angle were made higher the d/p ratio would need to be increased in order to ensure that the bend state was the stable state in the nucleation region. This is undesirable, since increasing the d/p ratio can reduce the brightness of the display. In this embodiment, the d/p ratio of the liquid crystal material is preferably kept to the lowest value that still enables the liquid crystal material to support the twist angle defined by the alignment direction 7 of the upper alignment layer 3 and the alignment direction 41' of the lower alignment layer 3' in the nucleation region, to ensure that the brightness of the device is not adversely affected.

In this embodiment, the alignment layer 3' on the lower substrate can be manufactured as described with reference to Figures 4(a) to 4(g). The alignment layer on the upper In this embodiment, the alignment layer 3' on the lower substrate can be manufactured as described with reference to Figures 4(a) to 4(g). The alignment layer on the upper substrate can be manufactured by a conventional deposition and rubbing process (such as that described with reference to Figures 4(a) and 4(b)).

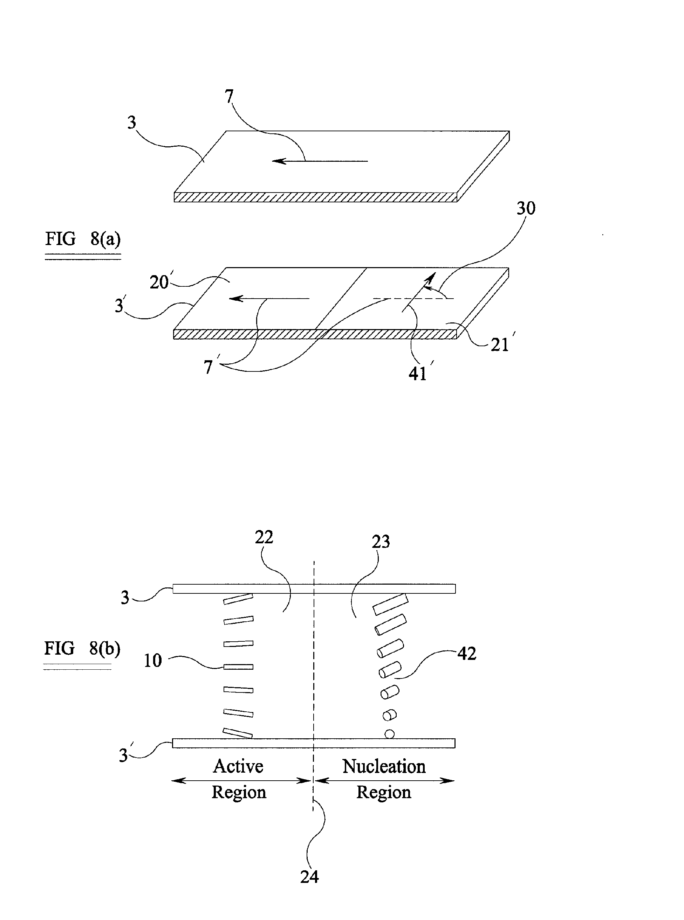

Figures 8(a) and 8(b) show a LCD according to a further embodiment of the present invention. This embodiment relates to a pi-cell. Figure 8(a) is a schematic perspective view of this embodiment, and Figure 8(b) is a schematic sectional view of this embodiment. Figures 8(a) and 8(b) illustrate the LCD when no electric field is applied across the liquid crystal layer.

The LCD of this embodiment is generally similar to the embodiment of Figures 7(a) and 7(b). In the active region of the LCD of this embodiment, the upper and lower alignment layers 3,3' have a parallel alignment, as in the previous embodiment. A splay state is thus the stable liquid crystal state in the active region when no electric field is applied across the liquid crystal layer.

A twist angle is defined in the liquid crystal in the nucleation region because, in the nucleation region, the direction 41' of the azimuthal component of the alignment direction of the lower alignment layer is not the same as the direction 7 of the azimuthal component of the alignment direction of the upper alignment layer.

In the embodiment of Figure 8(a) and 8(b) the second region 21 of the lower alignment layer 3' has a pre-tilt angle that is preferably small, more preferably substantially zero. This embodiment therefore requires that the liquid crystal material is a chiral liquid crystal material with d/p > 0, so that the desired twist in the nucleation region can be supported. In this embodiment the pre-tilt angle of both alignment layers in the active region was approximately 7°, although the pre-tilt of the active region may take any value used in a conventional pi-cell.

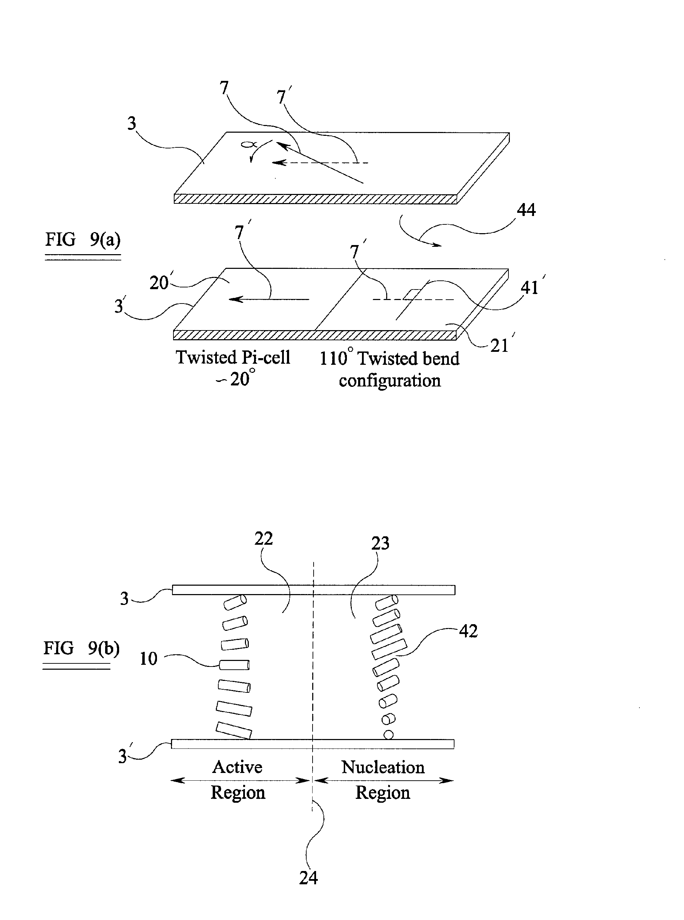

Figures 9(a) and 9(b) illustrate an LCD according to further embodiment of the present invention. This embodiment relates to a pi-cell. Figure 9(a) is a schematic perspective view of a LCD according to this embodiment, and Figure 9(b) is a schematic sectional view of a LCD according to this embodiment. Figures 9(a) and 9(b) illustrate the LCD when no electric field is applied across the liquid crystal layer.

The embodiment of Figures 9(a) and 9(b) is generally similar to the embodiments of Figures 7(a) to 8(b), in that the alignment layer on one substrate has a uniform azimuthal component of the alignment direction. The alignment layer on the other substrate has a patterned azimuthal component of the alignment direction. In the embodiment shown in Figures 9(a) and 9(b) the alignment layer 3' on the lower substrate (the substrates and addressing electrodes have again been omitted from Figures 9(a) and 9(b)) has a patterned azimuthal component of the alignment direction. In one region 20' of the lower alignment layer 3' the azimuthal component of the alignment direction is non-zero and extends in a first direction 7', and in a second region 21' the azimuthal component of the alignment direction of the lower alignment layer 3' is non-zero and extends in a second direction 41' different from the first direction 7'. In this embodiment, the direction 41' is at an angle of approximately 90° to the direction 7'. The azimuthal component of the alignment layer 3 on the upper substrate extends in a third direction 7 over the area of the alignment film.

When the upper and lower substrates are assembled to form the LCD, they are assembled so that the azimuthal component of the alignment direction of the upper alignment layer 3 is not parallel to the azimuthal component of the alignment direction of either region of the lower alignment layer 3'. The azimuthal component of the alignment direction of the first region 20' of the lower alignment layer 3' (that is the direction 7') is indicated in broken lines on both the upper alignment layer 3 and in the second portion 21' of the lower alignment layer 3'. The direction 7 of the azimuthal component of the alignment direction of the upper alignment layer is at an angle $\alpha$ to the azimuthal component of the alignment direction of the first region 20' of the lower alignment layer 3', which extends along direction 7'. This induces a twist angle $\alpha$ in the first liquid crystal volume 22 which corresponds to the first region 20' of the lower alignment layer 3'. The angle $\alpha$ is preferably between 0° and 30°, since twist angles in this range have been found not to have a detrimental effect on the performance of a pi-cell. In Figure 9(a) the angle $\alpha$ is shown as being approximately 20°. In this embodiment a splay state with a twist angle of $\alpha$ is the stable state within the liquid crystal volume 22 when no voltage is applied across the liquid crystal layer.

A twist angle is also defined in the liquid crystal molecules in the second liquid crystal volume 23 which corresponds to the second region 21' of the lower alignment layer 3'. In this embodiment this twist angle is approximately equal to $\alpha + 90°$, since the azimuthal component of the alignment direction of the second region 21' of the lower alignment layer (which extends in direction 41') is at substantially 90° to the azimuthal component of the alignment direction of the first region 20' of the lower alignment layer 3' (which extends along direction 7'). The second liquid crystal volume 23 again acts as a nucleation region, and the first liquid crystal volume 22 acts as an active region for displaying an image.

This embodiment overcomes the limitation of some patterning techniques that are able to change the alignment direction of an alignment layer only by substantially ±90°. If a patterned alignment layer in which the alignment direction varies by 90° between regions is used in the embodiment of Figures 8(a) and 8(b), the liquid crystal layer may adopt only a limited range of values for the d/p ratio. The embodiment of Figure 9(a) and 9(b) will require a liquid crystal material having a different range of values for the d/p ratio, owing to the twist induced in the liquid crystal molecules in both the active region and the nucleation region.

Furthermore, in this embodiment the region of the lower alignment layer 3' corresponding to the nucleation region may well have a zero pre-tilt angle. Many techniques that alter the alignment direction of an alignment layer by approximately 90° result in substantially zero pre-tilt angle in the area(s) of the alignment layer where the alignment direction has been changed. It is thus possible to use an achiral liquid crystal material in this embodiment, even if the second region 21' of the lower alignment layer has a substantially zero pre-tilt, since the alignment layers provide an initial bias to the liquid crystal material that will define the direction of twist in the liquid crystal material.

In one embodiment, the liquid crystal material had a twist of $\alpha = 20°$ in the active region, and had a twist of 110° in the nucleation region. The liquid crystal layer contained the liquid crystal material E7 (Merck), and this was doped to have a d/p ratio of approximately 0.1. The cell gap was 6μm. It was again found that applying a voltage of approximately 2.5V was sufficient to induce nucleation of the bend state in the active region. Applying a higher voltage than 2.5V resulted in faster nucleation of the bend state in the active region.

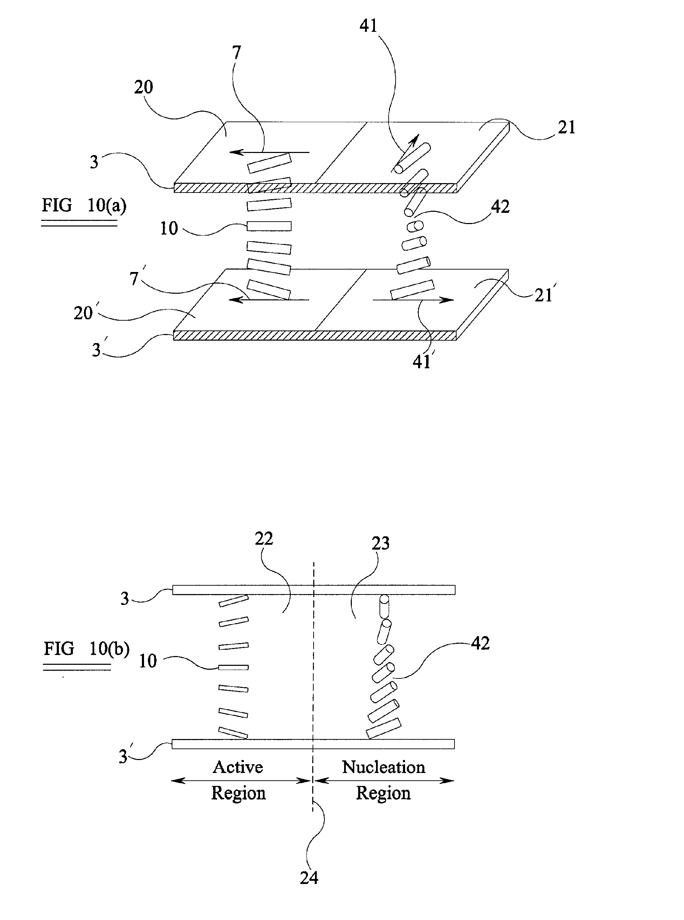

Figure 10(a) and 10(b) show an LCD according to a further embodiment of the present invention. This embodiment relates to a pi-cell. Figure 10(a) is a schematic perspective view of this embodiment, and Figure 10(b) is a schematic sectional view of this embodiment. Figures 10(a) and 10(b) illustrate the LCD when no electric field is applied across the liquid crystal layer.

In this embodiment the upper and lower alignment layers are each patterned to provide regions of different azimuthal component of the alignment directions. The lower alignment layer 3' has, in a first region 20', an azimuthal component of the alignment direction that is non-zero and extends along a first direction 7', and has in a second region 21' an azimuthal component of the alignment direction that is again non-zero and extends along a second direction 41'. The second direction 41' is at substantially 180° to the first direction 7', and both lie in the plane of the lower alignment layer. The upper alignment layer is patterned so that, in a first region 20, the azimuthal component of the alignment direction is non-zero and extends along a third direction 7, and in a second region 21 the azimuthal component of the alignment direction is non-zero and extends in a fourth direction 41. The third direction 7 and the fourth direction 41 are different from one another, and each lies in the plane of the lower alignment layer. When the liquid crystal display device is assembled, the substrates are arranged so that the azimuthal component of the alignment direction of the first region 20' of the lower alignment layer is parallel to the azimuthal component of the alignment direction of the first region 20 of the upper alignment layer 3. Thus, in a first liquid crystal volume 22, defined by the first regions 20',20 of the lower and upper alignment layers, the liquid crystal material has a parallel alignment, so that a splay state is the stable state in the absence of an applied electric field across the liquid crystal layer.

When the liquid crystal device is assembled, the azimuthal component of the alignment direction of the second region 21 of the upper substrate 3 is at approximately 90° to the azimuthal component of the alignment direction in the second region 21' of the lower alignment layer 3'. Thus, a twist angle of approximately 90° is induced in the liquid crystal material in a second liquid crystal volume 23 defined by the second regions 21', 21 of the lower and upper alignment layers. To support the 90° twist in the desired direction within the second liquid crystal volume, in order to ensure that a bend state is the stable liquid crystal state in the second liquid crystal volume in the absence of an applied voltage (and so ensure that the second liquid crystal volume acts as nucleation region), it is necessary for the liquid crystal material in this embodiment to be a chiral liquid crystal material. In one embodiment, the liquid crystal layer contains the liquid crystal material E7, and also contains the chiral dopant S811 (Merck) to stabilise the desired twist angle. Preferably the chiral dopant is used at a concentration that provides a d/p ratio in the range 0.03 < d/p << 0.25. In one embodiment, the chiral dopant S811 was used at a concentration of 0.09% in order to achieve a d/p ratio d/p = 0.06 (d = 6μm, p = 97μm).

It was again found that applying a voltage of approximately 2.5V across the liquid crystal layer was sufficient to induce nucleation of the bend state in the active region.

In the above embodiments, the invention has been described with reference to a liquid crystal display device that contains one active region and one nucleation region. In general, a liquid crystal display device will contain a plurality of pixels, which may be addressed independently from one another. When the present invention is applied to a pixelated device, it is preferable that each pixel is provided with a separate nucleation region, to ensure effective nucleation of the desired operating state in each pixel. Furthermore, an active region may be provided with two or more nucleation regions. Conversely, a nucleation region may serve two or more active regions.

In the embodiments described above, the active region and the nucleation region have been shown as having substantially equal areas. In general, however, the nucleation region may have a smaller area than the active region. For example, a typical size of an active region may be 80µm x 180µm, whereas nucleation regions may have a width of 10 to 20µm - nucleation has been observed in embodiments having a nucleation region in the form of a strip having a width of 10µm, Nucleation has also been observed in embodiments having a nucleation region in the form of a 30µm x 30µm square.

Where the invention is applied to a pixelated device, this may be preferable if a projection, onto a substrate of the device, of the nucleation region of a pixel surrounds the projection of the active region of that pixel. This has the advantage that, once the bend state has nucleated throughout the active region, the nucleation region will stabilise the bend state when the field across the liquid crystal layer is removed.

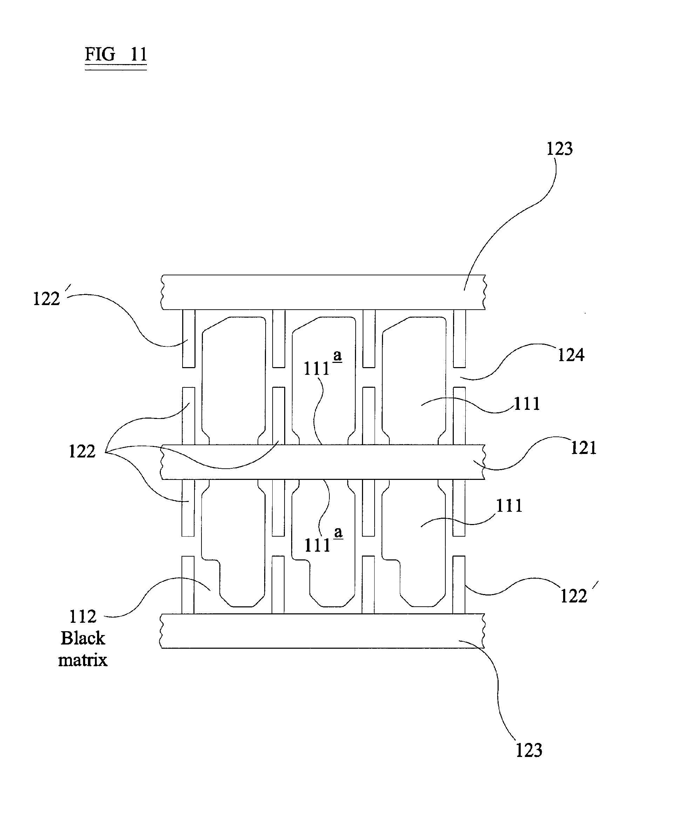

In an alternative embodiment, the nucleation region(s) for a pixel may not completely surround the active region of that pixel. Figure 11 is a plan view of an LCD according to the present invention in which the nucleation regions associated with one pixel do not completely surround the active region of that pixel. As can be seen, each pixel has an active area 111. A first boundary edge 111a of each active region 111 is bounded by a first nucleation region 121 that is adjacent to the active region. The opposite boundary edge of each active region 111 is bounded by a second nucleation region 123 that is separated from the active region 111 by a black mask 112. The second nucleation region 123 is generally parallel to the first nucleation region 121. Further nucleation region 122,122' are provided and these extend generally perpendicular to the first and second nucleation regions 121,123. The further nucleation regions 122,122' each extend between two neighbouring active regions 111. Each of the further nucleation regions extends away from either first or second nucleation region. Two further nucleation regions are provided between each two neighbouring active regions, and a gap 124 exists between the distal end of a nucleation region 122 extending from the first nucleation region and the distal end of the corresponding nucleation region 122' extending from the second nucleation region.

In the embodiment of Figure 11, each nucleation region 121,122,122',123 is defined in the liquid crystal layer in accordance with the invention as described hereinabove. Although each nucleation region is shown separately in Figure 11 they may in principle be continuous with one another. The arrangement of nucleation regions is not limited to that shown, and one or more of the nucleation regions of Figure 11 may be omitted.

An arrangement of nucleation regions in which the active area of a pixel is not completely surrounded by the nucleation region(s) has the advantage that, if nucleation of the desired operating state into the active region from the nucleation region fails in a particular pixel, the fact that the nucleation region(s) do not completely surround the active region will permit the growth of the operating state from an adjacent pixel in which nucleation of the operating state has been successful. This ensures that the operating state should exist in all pixels of the device after a suitable voltage has been applied.

In some cases it may be preferable to locate the nucleation region within a non-display portion of the LCD. For example, when the invention is applied to a pixelated device it would be possible to locate the nucleation region for a pixel within an inter-pixel gap. Removing the nucleation region from the display portion of the LCD maximises the contrast and aperture ratio of the LCD, since the provision of the nucleation region does not affect the display portion of the device.

Alternatively, a nucleation region of the invention could be provided partially within a display portion of the LCD and partially within a non-display portion of the LCD. When the invention is applied to a pixelated display, for example, a nucleation region for a pixel could be placed partially in an inter-pixel gap and partially in the display portion of that pixel. This has the advantage that the part of the nucleation region in the display portion of the device will experience the electric fields generated by the addressing electrodes, and this is advantageous in promoting nucleation of the desired liquid crystal state into the active region of the device. However, since a part of the nucleation region is disposed within the display portion of the device, the contrast and aperture ratio of the LCD will be reduced.

Alternatively, the nucleation region could be disposed entirely within a display portion of a LCD. As noted above, this has the advantage that the nucleation region will experience the electric fields generated by the addressing electrodes, and this is advantageous in promoting nucleation of the desired liquid crystal state. However, disposing the nucleation region within a display portion of the device will lower the contrast and aperture ratio of the LCD. To minimise this adverse effect, the area of the nucleation region must be made as small as possible, commensurate with the nucleation region still being effective at nucleating the desired operating state of the device.

The present invention may be applied to an active matrix LCD. In an active matrix LCD, the addressing electrode on one of the substrates is patterned to form a plurality of independently addressable pixel electrodes. This substrate, which is known as an "active matrix substrate", is further provided with switching elements and associated conductors for applying a desired voltage to a selected pixel electrode. One switching element that is frequently used on an active matrix substrate is a thin film transistor (TFT). One example of a TFT substrate is described in co-pending European patent application No 01301063.2, the contents of which are hereby incorporated by reference.

A TFT substrate generally comprises, for each pixel, a pixel electrode, a TFT, a gate electrode for controlling the TFT, and a signal electrode for supplying a voltage. Each pixel may further be provided with a storage capacitor. The signal electrode is connected to the source electrode of the TFT and the pixel electrode is connected to the drain electrode of the TFT. When the TFT is switched ON, by application of a suitable voltage to the gate electrode, the electrical charge supplied by the signal electrode is transmitted to the pixel electrode, and to the storage capacitor if one is provided.

The present invention may be applied to a TFT substrate. When the invention is applied to a TFT substrate, nucleation regions may be provided, for example by providing nucleation regions near or above the source electrode, the gate electrode and the storage capacitor (if provided).

The present invention may be applied to a transmissive LCD, a reflective LCD, or to a transflective LCD. In the case of a transmissive or transflective LCD, both the upper and lower substrates 1, 1' are required to be transparent. The substrates may be made of, for example glass or a suitable plastics material.

In a reflective LCD a reflector is provided within the LCD. Depending on the location of the reflector, it may be necessary for only one of the substrates of the LCD to be transparent - if the other substrate is disposed beyond the reflector, it may be an opaque substrate.

The invention has been described above with reference to a pi-cell. The invention is not, however, limited to a pi-cell, but may be applied to other LCDs in which it is necessary to nucleate a desired liquid crystal state before the device can be operated. In particular, the invention may be applied to a SBD LCD, or to a reverse-doped twisted nematic LCD.

A substrate having a patterned alignment layer, in which the direction of the azimuthal component of the alignment direction of the alignment layer varies over the area of the alignment layer, may be produced by any suitable method. The invention is not limited to a liquid crystal display device produced by the method described with reference to Figures 4(a) to 4(g).

As an example, a patterned alignment layer suitable for use in the present invention could alternatively be manufactured using a suitable photo-alignment technique, in which the direction of the azimuthal component of the alignment direction of an alignment layer is altered by irradiating a selected area of the alignment layer. A photo-alignment technique has a number of advantages, such as higher patterning resolution, and a reduced number of processing steps compared to a masked rubbing technique. Furthermore, it is a non-contact technique, and this may also be advantageous.

A patterned alignment layer may also be produced using a combination of a rubbing technique and a photo-alignment technique. For example, an alignment layer could be deposited on a substrate, and subjected to a uniform rubbing process over its entire area, as in Figure 4(b). However, rather than applying a second rubbing process, it would be possible to use a photo-alignment technique to change the alignment direction of selected areas of the alignment layer, by irradiating the rubbed alignment layer with ultra-violet light through a suitable mask.

Some known photo-alignment techniques can be used to pattern the alignment direction of an alignment layer, but result in a very low, or zero, pre-tilt of the alignment layer in the irradiated regions. Furthermore, some known photo-alignment techniques are limited to changing the alignment direction of an alignment layer to lie in a direction perpendicular to the original alignment direction. For example, this is the case for a bond-breaking photo-alignment process. These techniques may, however, be used in the manufacture of a device according to Figures 8(a) and 8(b) or figures 9(a) and 9(b) above.

A further method for producing an alignment layer having a patterned alignment direction makes use of the fact that, when rubbed, some materials align parallel to the rubbing direction and other materials align perpendicular to the rubbing direction. As an example, it would be possible to prepare a composite alignment layer, that contained regions of two different materials that react to a rubbing treatment in two different ways, and then uniformly rub the resultant alignment layer to produce a patterned alignment. As an example, a uniform alignment layer, for example a polyimide alignment layer, could initially be disposed over a substrate, after which another material, for example a polystyrene, is deposited over selected parts of the first alignment layer. When this composite alignment layer was rubbed, the polystyrene would align perpendicular to the rubbing direction and polyimide would align parallel to the rubbing direction, thereby creating an alignment layer having regions of two different alignment directions.

In the above method, it would be possible to deposit the polystyrene using a printing technique. This would make it possible to print a desired pattern of polystyrene regions onto a uniform alignment layer.

Rubbing polystyrene gives a very low pre-tilt, so manufacturing a patterned alignment layer in this way would be particularly suitable for use in the devices described with reference to Figures 8(a) and 9(a). Figure 8(a) relates to a LCD that provides a nucleation region in a patterned alignment layer that has very low pre-tilt angles. The embodiment of Figure 9(a) again relates to a patterned alignment layer having a very low pre-tilt, but is also suitable for use with a processing technique that may only vary the alignment orientation by 90°.

**Claims**

1. A liquid crystal display device comprising: a first substrate; a second substrate, a liquid crystal layer disposed between the first substrate and the second substrate; a first alignment layer disposed on a surface of the first substrate; and a second alignment layer disposed on a surface of the second substrate;

   the device being **characterised in that** the alignment direction of the first alignment layer (3') has a non-zero component in a first azimuthal direction (7') in a first region (20') of the first alignment layer (3') and has a non-zero component in a second azimuthal direction (41') in a second region (21') of the first alignment layer (3'), the first azimuthal direction (7') being different from the second azimuthal direction (41') whereby, in zero applied field, a first liquid crystal state is stable in a first volume (22) of the liquid crystal layer defined by the first region (20') of the first alignment layer (3') and a second liquid crystal state topologically equivalent to a desired operating state of the device is stable in a second volume (23) of the liquid crystal layer defined by the second region (21') of the first alignment layer (3').

2. A liquid crystal display device as claimed in claim 1 wherein the alignment direction of the second alignment layer (3) has a non-zero component in a third azimuthal direction (7) in a first region (20) of the second alignment layer (3) and has a non-zero component in a fourth azimuthal direction (41) different from the third azimuthal direction (7) in a second region (21) of the second alignment layer (3).

3. A liquid crystal display device as claimed in claim 2 wherein the first region (20') of the first alignment layer (3') is disposed generally opposite the first region (20) of the second alignment layer (3), and the first azimuthal direction (7') is substantially parallel to the third azimuthal direction (7).

4. A liquid crystal display device as claimed in claim 2 or 3 wherein the second region (21') of the first alignment layer (3') is disposed generally opposite the second region (21) of the second alignment layer (3), and the second azimuthal direction (41') is substantially anti-parallel to the fourth azimuthal direction (41).

5. A liquid crystal display device as claimed in any preceding claim wherein the azimuthal component of the alignment direction of the first region (20') of the first alignment layer (3') is at substantially 90° to the azimuthal component of the alignment direction of the second region(21') of the first alignment layer (3').

6. A liquid crystal display device as claimed in claim 2 or 3 wherein the second region (21') of the first alignment layer (3') is disposed generally opposite the second region (21) of the second alignment layer (3), and wherein the second and fourth azimuthal directions (41',41) are selected to induce a liquid crystal twist angle $\phi$ in the second liquid crystal volume (23).

7. A liquid crystal display device as claimed in claim 6 wherein $|\phi| < 90°$.

8. A liquid crystal display device as claimed in claim 7 wherein the liquid crystal layer is a layer of achiral liquid crystal material.

9. A liquid crystal display device as claimed in claim 6 wherein $90° \leq |\phi| < 165°$.

10. A liquid crystal display device as claimed in claim 9 wherein the liquid crystal layer is a layer of chiral liquid crystal material.

11. A liquid crystal display device as claimed in claim 1 wherein the azimuthal component of the alignment direction of a region of the second alignment layer (3) disposed opposite the first region (20') of the first alignment layer (3') is substantially the same as the azimuthal component of the alignment direction of a region of the second alignment layer (3) disposed opposite the second region (21') of the first alignment layer (3').

12. A liquid crystal device as claimed in claim 11 wherein the azimuthal component of the alignment direction of the region of the second alignment layer (3) disposed opposite the second region (21') of the first alignment layer (3') is not parallel to the azimuthal component of the alignment direction of the second region (21') of the first alignment layer (3').

13. A liquid crystal device as claimed in claim 12 wherein the azimuthal component of the alignment direction of the region of the second alignment layer (3) disposed opposite the second region (21') of the first alignment layer (3') is at substantially 90° to the azimuthal component of the alignment direction of the second region (21') of the first alignment layer (3').

14. A liquid crystal display device as claimed in claim 13 wherein the pre-tilt angle of the second region (21') of the first alignment layer (3') is substantially zero.

15. A liquid crystal display device as claimed in claim 14 wherein the liquid crystal layer is a layer of an achiral liquid crystal material.

16. A liquid crystal device as claimed in claim 12 wherein the azimuthal component of the alignment direction of the region of the second alignment layer (3) disposed opposite the first region (20') of the first alignment layer (3') is not parallel to the azimuthal component of the alignment direction of the first region (20') of the first alignment layer (3').

17. A liquid crystal device as claimed in any of claims 11 to 16 wherein the azimuthal component of the alignment direction of the first region (20') of the first alignment layer (3') is substantially at 90° to the azimuthal component of the alignment direction of the second region (21') of the first alignment layer (3').

18. A liquid crystal display device as claimed in any preceding claim wherein the device comprises a plurality of pixels, the first volume (22) of the liquid crystal layer and the second volume (23) of the liquid crystal layer being provided for the same pixel.

19. A liquid crystal display device as claimed in claim 18 wherein the second volume (23) of the liquid crystal layer is provided at least partially in a non-display portion of the device.

20. A liquid crystal display device as claimed in claim 19 wherein the second volume (23) of the liquid crystal layer is provided entirely in a non-display portion of the device.

21. A liquid crystal display device as claimed in any preceding claim wherein a projection onto a selected one of the substrate of the second liquid crystal volume (23) surrounds a projection onto the selected one of the substrate of the first liquid crystal volume (22).

22. A liquid crystal display device as claimed in any preceding claim wherein the device is a pi-cell.

23. A liquid crystal display device as claimed in any of claims 1 to 21 wherein the device is an SBD liquid crystal display device.

24. A liquid crystal display device as claimed in any of claims 1 to 21 wherein the device is a reverse-doped twisted nematic liquid crystal display device.

FIG 1

FIG  2 (a)

7

3

10

3'

7'

FIG  2 (b)

7

3

12

11

3'

7'

FIG  2 (c)

7

3

13

3'

7'

FIG  2 (d)

7

3

12

11

3'

7'

FIG 3(a)

Active Region

Nucleation Region

FIG 3(b)

Active Region

Nucleation Region

13

FIG 4(a)

1

13

FIG 4(b)

13                               8

FIG 4(c)

13                               8′

FIG 4(d)

9          9

FIG 4(e)

9  9′  9  9′  9  9′  9      3

FIG 4(f)

FIG 4(g)                         1

3

9        9′

9    9′

1′

Active Region | Nucleation Region

7
3
20
10
41
21
42
20'
3'
7'
21'
41'
φ

FIG 5(a)

22
23
3
10
42
3'
24

Active Region | Nucleation Region

FIG 5(b)

EP 1 300 721 A2

Active Region    Nucleation Region

FIG 6(a)

FIG 6(b)

Active Region    Nucleation Region

24

FIG 7(a)

7

3

30

20'

3'

7'

7'

41'

21'

FIG 7(b)

22

23

3

10

42

3'

| Active Region | Nucleation Region |

24

FIG 8(a)

FIG 8(b)

Active Region

Nucleation Region

FIG 9(a)

Twisted Pi-cell
~ 20°

110° Twisted bend
configuration

FIG 9(b)

Active
Region

Nucleation
Region

FIG   10(a)

FIG   10(b)

Active
Region

Nucleation
Region

FIG 11